# EUROPEAN PATENT SPECIFICATION

(11) **EP 4 509 388 B1**
(45) Date of publication and mention of the grant of the patent: **29.04.2026**
(21) Application number: 24189496.3
(22) Date of filing: 18.07.2024
(51) Int. Cl.: B62D 1/06

(54) **STEERING WHEEL VENTILATION SYSTEM**
LENKRADBELÜFTUNGSSYSTEM
SYSTÈME DE VENTILATION DE VOLANT DE DIRECTION

(30) Priority: 16.08.2023 NL 2035616
(43) Date of publication of application: 19.02.2025
(73) Proprietor: Van Eijndhoven, Bram, 5062 CE Oisterwijk (NL)
(72) Inventor: VAN EIJNDHOVEN, Bram, 5062 CE OISTERWIJK (NL); DE KOSTER, Luuk Robertus Marcus, 5056 KA BERKEL-ENSCHOT (NL); VAN EIJNDHOVEN, Bart, 5062 CE OISTERWIJK (NL)
(74) Representative: EP&C

(56) References cited:
- WO-A1-2015/149500

## Description

### FIELD OF THE INVENTION

The present invention relates to a steering wheel ventilation system configured to ventilate a steering wheel of a vehicle.

### BACKGROUND OF THE INVENTION

Air conditioning systems increase comfort for a driver and occupants of a modern vehicle. These systems are able to decrease the ambient temperature in a vehicle on sunny days. However, the steering wheel of the vehicle can get quite hot too, especially when it is parked and is shined upon by the sun. This could lead to sore and/or sweaty hands, which is not very comfortable and may even form a safety hazard. Sweaty hands lead to less grip and less steering control. The comfort of the driver and the safety of the driver and the occupants can be improved with a dedicated ventilation system for the steering wheel. In this field, various concepts have been proposed.

WO2015149500A1 (herein: D1) discloses a climate control device to increase or decrease the surface temperature of a steering wheel using a hot or cold air flow. The climate control device comprises an air moving device for providing a stream of air, a steering wheel distributor and an air guiding device. The air guiding device guides the hot or cold air flow between the air moving device and the steering wheel distributor. The air moving device is positioned in the steering column and the steering wheel distributor in the steering wheel.

One drawback is that this concept requires a complex transfer of the air from the static steering column to the movable steering wheel. Another drawback of the concept of D1 is that it requires multiple air channels to enable an air flow from the air moving device to the steering wheel distributor and from the steering wheel distributor to the air moving device. Multiple air channels result in a more complex design, which is more difficult to implement due to a limited amount of space in a car steering system.

Another example of a climate control device for a car steering system is disclosed in WO2015175483A1 (herein: D2). The climate control device has a heater and a ventilation system comprising a distribution system and one or more blowers. The distribution system and blowers are located in the steering wheel. The right side and left side each have a separate distribution system with two blowers.

It was recognized in the present invention that a drawback of the concept of D2 is that each blower requires electrical energy which must be transferred from the static steering column to the movable steering wheel. This requires a complex transition piece. It was further recognized in the present invention that the small blowers do not have sufficient cooling capacity due to their size. Increasing the size of the blowers is undesirable due to a lack of space in a modern steering wheel. US9033366B1 (herein: D3) discloses a similar climate control device as D2, with similar drawbacks.

WO2018052873A1 (herein: D4) discloses a climate control device for a car steering system which uses a hot and/or cold air flow from the air conditioning system of the car to manage the temperature of the steering wheel. The hot and/or cold air flow is guided to the steering wheel through an air conditioning connection in the steering column. The air flow is then guided through a transition piece between the static steering column and the movable steering wheel. The surface of the steering wheel is heated and/or cooled by the air flow through an air channel close to the surface. The surface may additionally include openings through which the airflow may exit the air channel.

A drawback of the system of D4 is that it must be connected to one of the air conditioning system's air ducts. An additional controllable valve must be added somewhere in the air conditioning connection to individually control the temperature of the steering wheel. This requires additional modifications to the car and makes it more complicated to offer as a luxury option. Another drawback is the requirement of a complex transition piece between the static steering column and the movable steering wheel.

KR102117997B1 (herein: D5) and FR3093495A1 (herein: D6) also disclose climate control devices for a car steering system that uses a hot and/or cold air flow from the air conditioning system of the car to manage the temperature of the steering wheel. The concepts of D5 and D6 provide the same drawbacks as the concept of D4.

Another example of a climate control device for a car steering system is presented in WO201175335A1 (herein: D7). The document discloses two different embodiments which both do not use an hot and/or cold air flow to control the temperature of the steering wheel. The first embodiment includes a heat exchanger in the transition piece between the static steering column and the movable steering wheel. The heat exchanger extracts energy from a fluid in the gas-tight channels in the steering wheel. The second embodiment comprises a thermal electric connection device in the transition piece which provides thermal energy to thermal conduction elements in the steering wheel.

A drawback of both embodiments of D7 is the complex transition piece between the steering column and the steering wheel. The gas-tight channels in a steering wheel also increase the complexity as it may form a significant risk when a leak occurs. In addition, implementation of a heat exchanger or thermal electric unit seems to be unnecessary complex and expensive. Another drawback of these systems is that they do not allow a cold air flow out of the steering wheel, which will reduce the user experience of the driver.

### OBJECT OF THE INVENTION

It is an object of the invention to overcome at least one of the abovementioned drawbacks and to provide an improved steering wheel ventilation system for a vehicle.

It is an object of the invention to provide a steering wheel ventilation system which is relatively simple in construction and can be produced at relatively low costs.

### SUMMARY OF THE INVENTION

At least one the above mentioned objects is achieved with a steering wheel ventilation system for creating an airflow through a hand-held portion of a steering wheel of a vehicle, the steering wheel ventilation system comprising:
- a steering column part configured to be integrated in or connected to a steering column of the vehicle, the steering column part comprising a stator of a drive,
- a steering wheel part configured to be integrated in or connected to the steering wheel of the vehicle, the steering wheel part comprising:
   ∘ a rotor of the drive, wherein the rotor is configured to rotate about a ventilation axis,
   ∘ an impeller housing configured to be integrated in or connected to the steering wheel and configured for accommodating an impeller, the impeller housing having an air inlet and an air outlet,
   ∘ the impeller positioned within the impeller housing, the impeller being connected to the rotor, the impeller being configured to pump air from the inlet into at least one air channel connected to the outlet,
   ∘ the at least one air channel connected at one end to the air outlet and configured to be in fluid communication with the hand-held portion of the steering wheel.

By allowing an airflow through the hand-held portion of the steering wheel, the comfort of the driver and safety of the driver and the occupants is improved. The airflow through the hand-held portion of the steering wheel prevents sore and/or sweaty hands. The airflow through the steering wheel may also decrease the temperature of the steering wheel when the ambient temperature in the vehicle is lower than the temperature of the steering wheel.

By having the stator in the steering wheel column and the rotor in the steering wheel part, a relatively simple construction is obtained. By incorporating the air inlet in the steering wheel part, no air channel is necessary between the steering wheel column and the steering wheel part. This further simplifies the construction.

In some of the embodiments, the drive may be a direct drive, in particular a radial flux motor, wherein the stator comprises multiple coils which are positioned in a circular arrangement, and the rotor comprises a plurality of magnets positioned in a circular arrangement.

By having the stator of the drive integrated in or connected to the steering column of the vehicle and the rotor of the drive integrated in or connected to the steering wheel of the vehicle, a complex transfer of air or electrical power from the static steering column to the movable steering wheel is prevented. The radial magnetic flux perpendicular to the ventilation axis generated by the radial flux motor rotates the impeller to create the airflow through the steering wheel. This results in a relatively simple construction.

In some of the embodiments, the steering wheel ventilation system may comprise an air gap between the stator and the rotor, wherein the air gap is in fluid communication with the air inlet of the impeller housing.

In some of the embodiments, the rotor may be connected to a rear side of the impeller.

The distance between the rotor and the stator may be smaller when the rotor is connected to a rear side of the impeller. In that way, the impeller is not positioned between the rotor and the stator. A smaller distance between the rotor and the stator will improves the performance of the drive.

In some of the embodiments, the impeller may comprise a plurality of vanes, wherein the vanes are positioned on a front side of the impeller.

The vanes are important to create the air flow in the impeller housing. The vanes should be positioned on the front side of the impeller to provide space on the rear side of the impeller for the rotor.

In some of the embodiments, steering wheel ventilation system may comprise at least one bearing which provides radial and axial support to the steering wheel part.

The bearing is important to allow a connection between a static steering shaft and a rotatable rotor and impeller. A bearing is able to provide this connection with a reduced friction. A lower friction will improve the power efficiency of the drive.

The invention further relates to a steering system for a vehicle, the steering system comprising:
- a steering column and
- a steering wheel, and
- the steering wheel ventilation system as just described,

wherein the steering column part is integrated in or connected to the steering column,
and wherein the steering wheel part is integrated in or connected to the steering wheel,
   wherein an at least one air channel is in fluid communication with a hand-held portion of the steering wheel,
   wherein the hand-held portion comprises an air manifold and comprises multiple holes in a wall thereof for passing the air which is pumped by the impeller via the air channel and via the air manifold through the holes to the outside.

The steering system for a vehicle provides the same advantages as the device.

In some of the embodiments, the impeller and the impeller housing may be positioned in a central portion of the steering wheel.

By having the impeller and the impeller housing positioned in the central portion of the steering wheel, the shape of the hand-held portion of the steering wheel can be chosen by the vehicle manufactures.

In some of the embodiments, the steering wheel may be rotatable about a steering wheel rotation axis, and wherein the ventilation axis is coaxial with the steering wheel rotation axis.

In some of the embodiments, the air inlet may be positioned on a rear side of the steering wheel to draw air in via the air gap.

The air inlet positioned on the rear side of the steering wheel makes it invisible for the driver and/or other occupants of the vehicle. It also provides vehicle manufacturers the freedom to design their own steering wheel without any visible requirements on the front side of the steering wheel.

In some of the embodiments, the steering wheel may comprise an air manifold having multiple holes extending radially through a wall of the hand-held portion of the steering wheel.

The holes extending radially through the wall of the hand-held portion of the steering wheel provide an air flow from the air manifold to the environment surrounding the hand-held portion of the steering wheel. The air flow provided to the environment surrounding the hand-held portion of the steering wheel improve the comfort of the driver. The air which flows close to the hands of a driver will absorb heat and moisture from our hands to provide a fresh feeling and reduce sore and/or sweaty hands.

In some of the embodiments, the handheld portion may comprise a curved, in particular annular, tube and wherein the air manifold is formed by the tube.

The curved, in particular annular, tube comprises the shape of a regular steering wheel. Allowing it to be integrated in an existing steering wheel more easily. It may also be possible to provide different implementations of the tube, with for example one or more sharper edges. This will also allow integration of the tube into the steering wheels of for example sport cars.

The invention further relates to a vehicle, in particular a car, comprising the steering system.

The vehicle provides the same advantages as the device and the steering system for the vehicle.

In some of the embodiments, the vehicle may comprise a board computer, wherein the board computer controls the drive. This may allow integration of the steering wheel ventilation system into the climate control subsystem of a vehicle. This subsystem may be able to control the steering wheel ventilation system based on climate conditions in and/or around the vehicle.

In some of the embodiments, the vehicle may comprise a power supply having a range of 0 - 20 W, wherein the drive is connected to the power supply.

In some of the embodiments, the rotational speed of the impeller may be controlled by adjusting the frequency of an electric current supplied to the drive by the power supply.

In some of the embodiments, the torque of the drive may be controlled by adjusting the current level of the electric current supplied to the drive by the power supply.

The combination between the board computer and the power supply with different control parameters allows the system to adapt to different environmental conditions. The air density at sea level differs from the air density at higher altitudes. This may require a different torque level of the drive to create a constant air flow. A driver may also desire to have the air flow increased or decreased depending on the temperature and atmospheric humidity by changing the current level supplied to the drive by the power supply.

These and other aspects of the invention will be more readily appreciated as the same becomes better understood by reference to the following detailed description and considered in connection with the accompanying drawings in which like reference symbols designate like parts.

### BRIEF DESCRIPTION OF THE FIGURES

Figure 1 shows an isometric view of a steering wheel and a steering column with the invention.
Figure 2 shows an exploded isometric view of the steering wheel ventilation system.
Figure 3 shows an isometric rear view of the steering wheel and steering wheel ventilation system.
Figure 4 shows a cross-sectional side view of a steering wheel and a steering column with the invention.
Figures 5a - 5c show an isometric view of the steering column and the invention.
Figure 6 shows an isometric view of the steering wheel ventilation system.
Figure 7 shows an isometric rear view of the steering wheel.
Figure 8 shows a front view of the steering wheel.

### DETAILED DESCRIPTION OF THE FIGURES

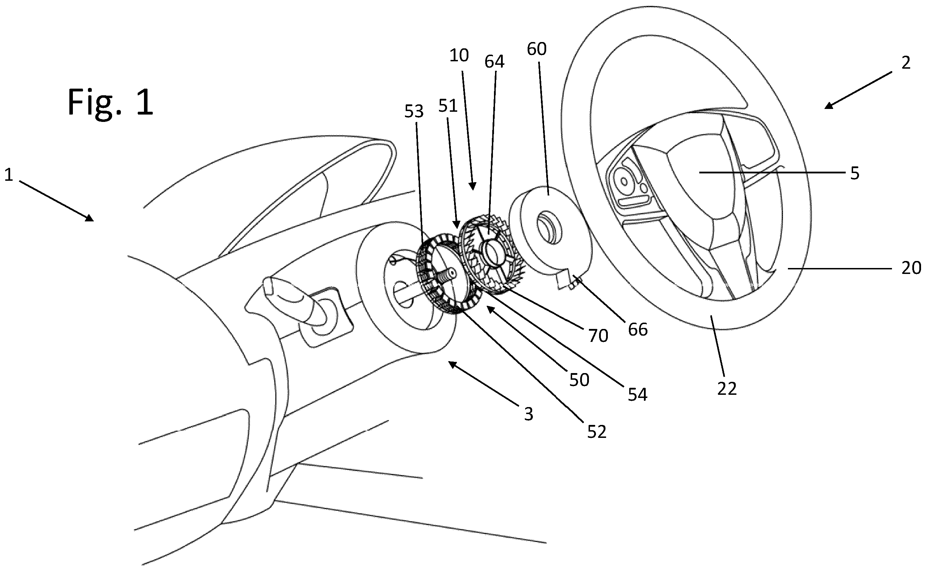

Turning to figures 1-2, a steering system for a vehicle 1, in particular a car, is shown. The steering system for a vehicle comprises a steering column 3, a steering wheel 2 and a steering wheel ventilation system 10. The steering wheel ventilation system 10 comprises a steering column part 30 and a steering wheel part 40. The steering column part 30 is integrated in or connected to the steering column 3. The steering wheel part 40 is integrated in or connected to the steering wheel 2. The steering wheel further comprises a hand-held portion 20. The hand-held portion is being held by the driver while driving the vehicle.

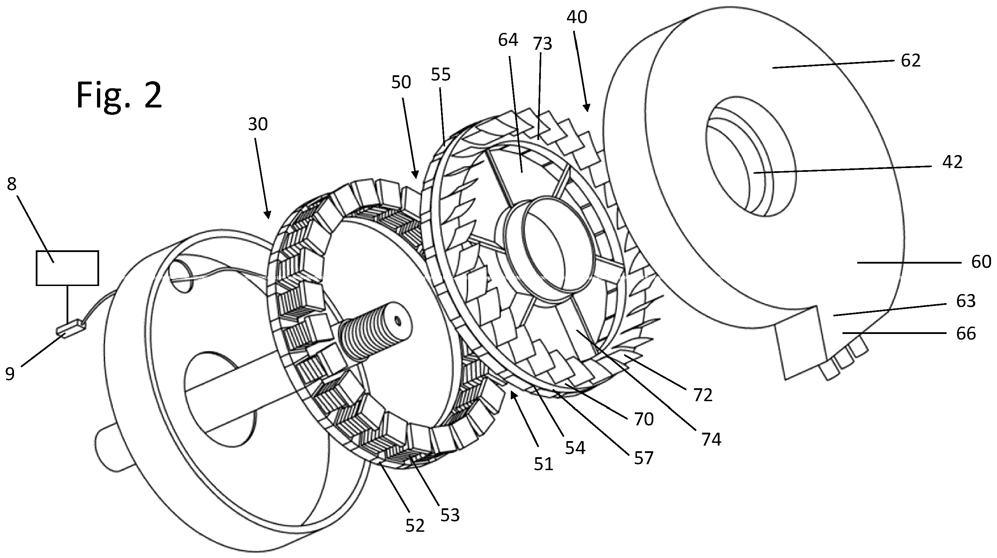

In figure 2, the steering wheel ventilation system 10 for creating an airflow through the hand-held portion 20 of the steering wheel 2 of the vehicle 1 is shown. The steering column part 30 comprises a stator 52 of a drive 50. The steering wheel part 40 comprises the rotor 54 of the drive 50. The rotor 54 is configured to rotate about a ventilation axis 56. The drive 50 is a direct drive, in particular a radial flux motor 51. The stator comprises multiple coils 53 which are positioned in a circular arrangement 58. The rotor comprises a plurality of magnets 55 positioned in a circular arrangement 59.

The steering wheel part 40 further comprises an impeller housing 60 which is configured to be integrated in or connected to the steering wheel 2. The impeller housing has an air inlet 64 and an air outlet 66.The impeller housing 60 is also configured for accommodating an impeller 70. The impeller 70 is positioned within the impeller housing 60 and is connected to the rotor 54. The impeller is configured to pump air from the inlet 64 into at least one air channel 68 connected to the outlet 66. The at least one air channel 68 is connected at one end 69 to the air outlet 66 and is configured to be in fluid communication with the hand-held portion 20 of the steering wheel 2. The air pumped by the impeller 70 is guided by the air channel 68 to the hand-held portion 20 of the steering wheel 2.

The impeller 70 comprises a plurality of vanes 72. The vanes 72 are positioned on a front side 73 of the impeller. The vanes 72 create an airflow 76 in the impeller housing 60 to the air outlet 66. The orientation of the vanes 72 is customized to the shape of the impeller housing 60. The impeller housing 60 has an annular shape 62 with an outstanding part 63. The orientation of the vanes create an airflow 76 to the outstanding part 63 of the impeller housing 60. The air flow 76 leaves the impeller housing 60 through the air outlet 66.

The vehicle 1 comprises a board computer 8. The board computer 8 controls the drive 50 through a power supply 9. The power supply has a range of 0 - 20 W. The rotational speed of the impeller 70 may be controlled by adjusting the frequency of the power supplied by the power supply 9 to the drive 50. The torque of the drive 50 may be controlled by adjusting the current level of the power supplied by the power supply 9 to the drive 50.

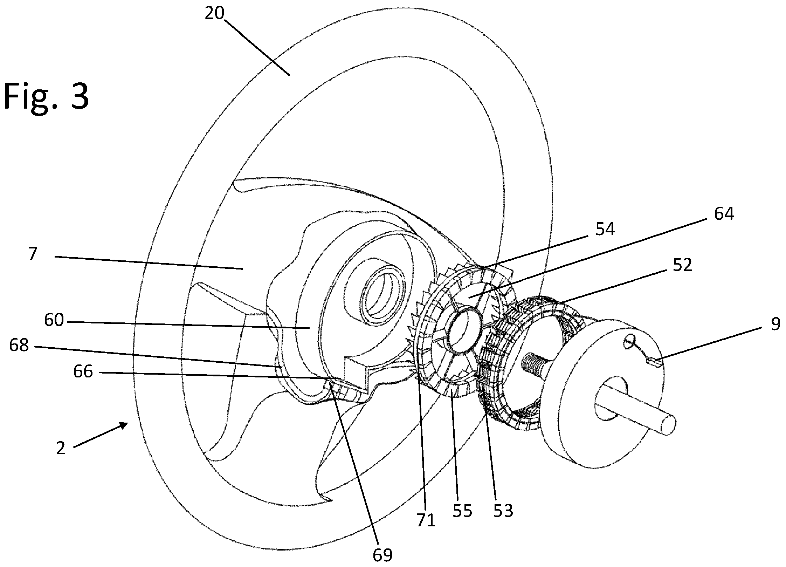

Turning to figure 3, a rear side 7 of the steering wheel 2 with the steering wheel ventilation system 10 is shown. The rotor 54 is connected to a rear side 71 of the impeller. The impeller 70 and the impeller housing 60 are positioned in a central portion 5 of the steering wheel.

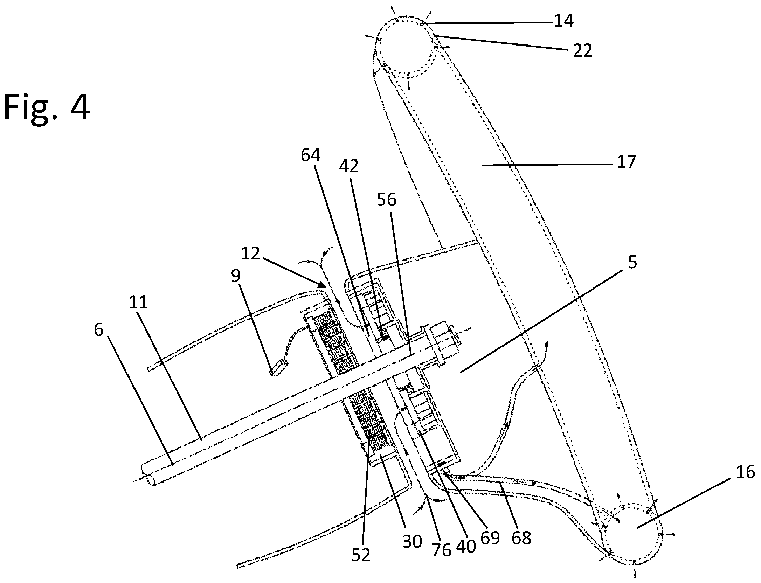

Turning to figure 4, a cross-sectional, side view of the steering wheel 2 and the steering column 3 is shown. An air gap 12 is provided between the stator 52 and the rotor 54, between the steering wheel 2 and the steering column 3. The air gap 12 is in fluid communication with the air inlet 64 of the impeller housing 60.

The air gap 12 allows the air flow 76 to flow from the environment of the vehicle 1 to the air inlet 64 of the impeller housing 60. The air inlet 64 is positioned on the rear side 7 of the steering wheel 2 to draw in air via the air gap 12. The air inlet 64 positioned on the rear side 7 of the steering wheel 2 makes it invisible for the driver or other occupants of the vehicle. This gives vehicle manufacturers the possibility to design their own steering wheel without any visible requirements of the steering wheel ventilation system.

The width of the air gap 12 depends on the characteristics of the drive 50 and the requirements for sufficient air flow 76. The steering column part 40 and the steering wheel part 30 should be sufficiently spaced from each other to allow sufficiently large air flow 76, but the space cannot be too large due to the restrictions of the drive 50. A radial flux motor 51 becomes less efficient when the distance between the stator 52 and the rotor 54 is too large.

The steering wheel ventilation system 10 further comprises at least one bearing 42 to provide radial and axial support to the steering wheel part 40. The bearing 42 allows rotational movement of the rotor 54 and the impeller 70 about the ventilation axis 56. The ventilation axis 56 is coaxial with a steering wheel rotation axis 6. The steering wheel 2 is rotatable about the steering wheel rotation axis 6. The bearing 42 is presently shown to be connected to the steering shaft 11 of the steering wheel 2. Different implementations of the bearing 42 are also possible. The bearing 42 may also be connected to an outer edge 57 of the rotor 54 and the impeller housing 60.

Returning to figure 2, the steering wheel part 40 further comprises multiple inlet vanes 74. The inlet vanes 74 connect the impeller 70 to the bearing 42. The inlet vanes 74 increase the air flow 76 into the impeller housing 60 and thereby support the vanes 72 of the impeller 70. The inlet vanes 74 are slightly inclined relative to the normal of inlet 64. The inclination guides the air flow 76 into the impeller housing 60.

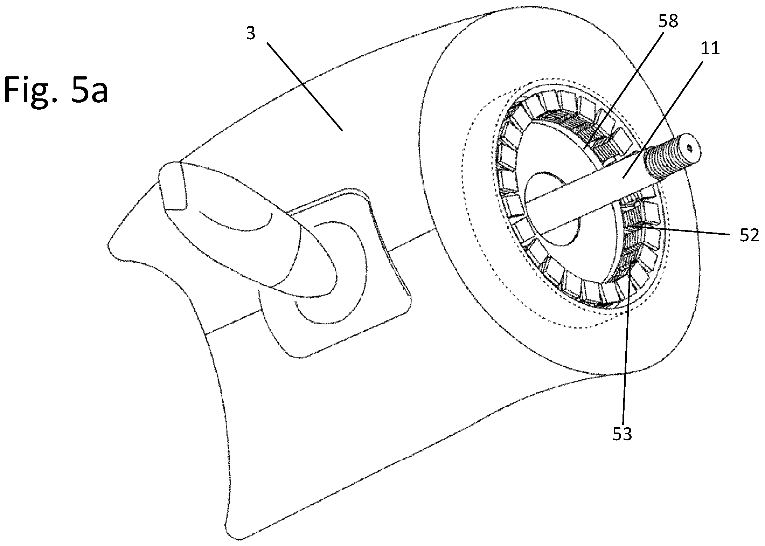

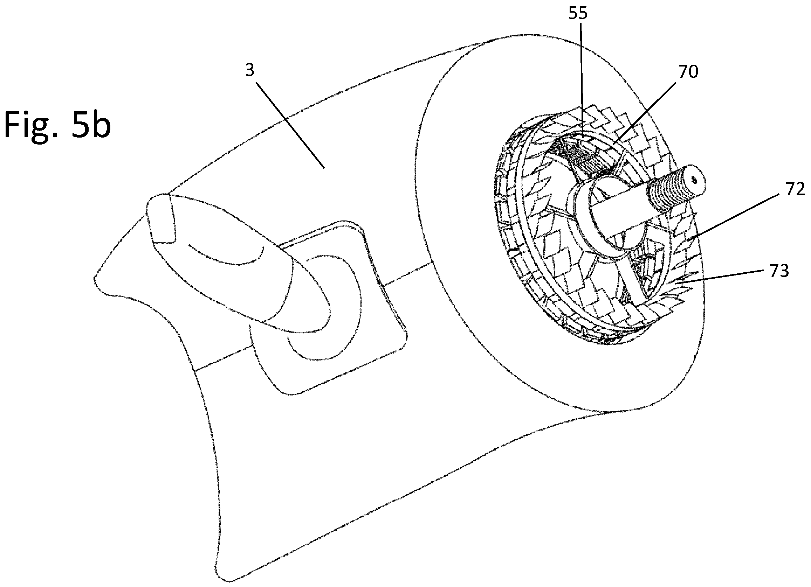

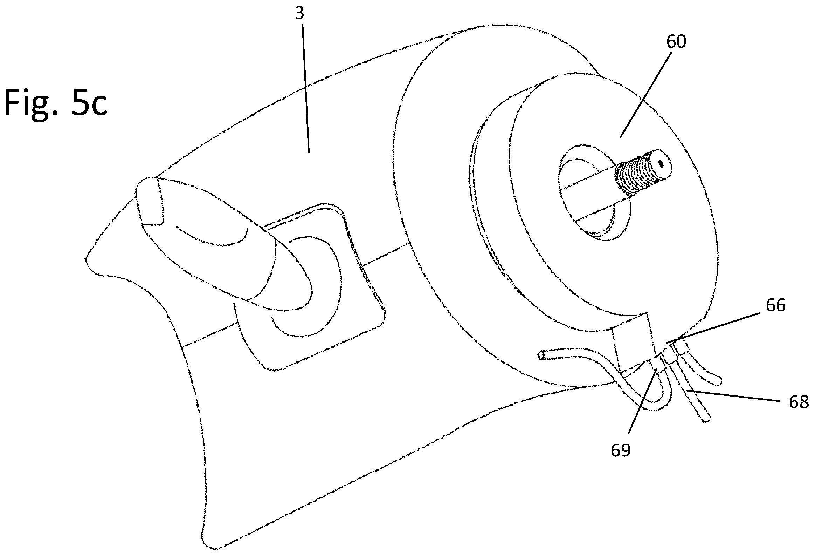

Turning to figures 5a - 5c, the steering column 3 with the steering wheel ventilation system 10 is shown. The steering column part 40 is shown to be integrated into the steering column 3. It may also be possible to position the steering column part 40 in front of the steering column 3. The steering column part 40 is positioned around the steering shaft 11.

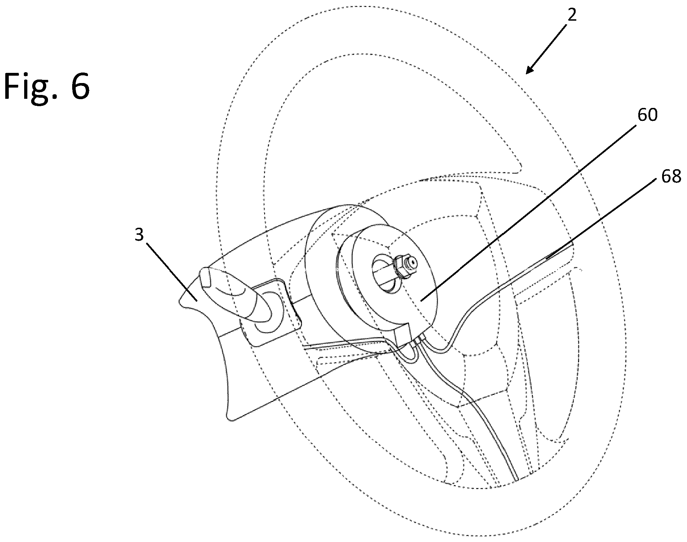

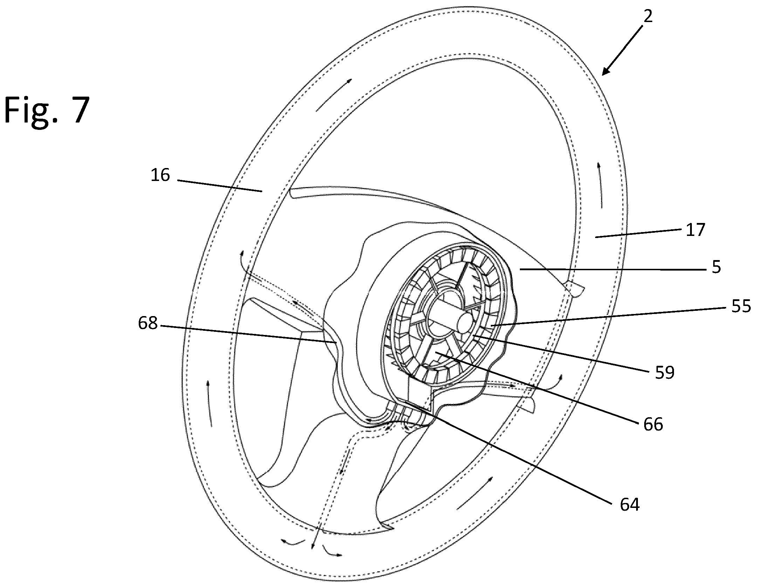

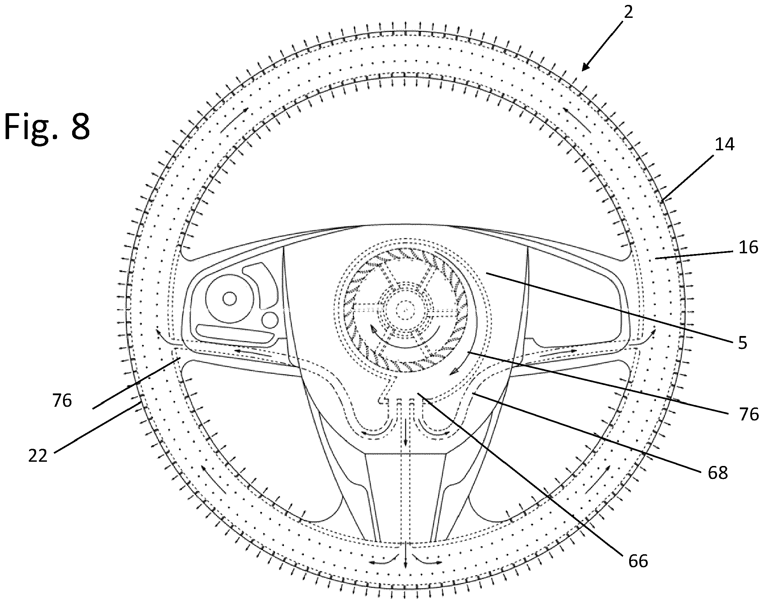

Turning to figures 6 - 8, the air flow 76 through the steering wheel is shown. At least one air channel 68 is in fluid communication with the hand-held portion 20 of the steering wheel 2. The air channel 68 is connected at one end 69 to the air outlet 66 of the impeller housing 60. The hand-held portion 20 of the steering wheel 2 comprises an air manifold 16. The air manifold 16 is formed by a curved, in particular annular, tube 17. The curved, in particular annular, tube 17 comprises a wall 22.

The air manifold 16 has multiple holes 14 extending radially through the wall 22 of the hand-held portion 20 of the steering wheel 2. The holes 14 allow the air flow 76, which is pumped by the impeller 70, to pass through the holes 14 to the outside. The air flow 76 leaving the holes 14 provides a fresh stream of air close to the wall 22 of the hand-held portion 20. The fresh stream of air increases the comfort of the driver and prevents sweaty and/or sore hands for the driver.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention. Not all embodiments may achieve all stated objects.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

## Claims

1. Steering wheel ventilation system (10) for creating an airflow through a hand-held portion (20) of a steering wheel (2) of a vehicle (1), the steering wheel ventilation system comprising:
- a steering column part (30) configured to be integrated in or connected to a steering column (3) of the vehicle, the steering column part comprising a stator (52) of a drive (50),
- a steering wheel part (40) configured to be integrated in or connected to the steering wheel of the vehicle, the steering wheel part comprising:
∘ a rotor (54) of the drive, wherein the rotor is configured to rotate about a ventilation axis (56),
∘ an impeller housing (60) configured to be integrated in or connected to the steering wheel and configured for accommodating an impeller (70), the impeller housing having an air inlet (64) and an air outlet (66),
∘ the impeller (70) positioned within the impeller housing, the impeller being connected to the rotor, the impeller being configured to pump air from the inlet into at least one air channel (68) connected to the outlet,
∘ the at least one air channel connected at one end (69) to the air outlet and configured to be in fluid communication with the hand-held portion of the steering wheel.

2. Steering wheel ventilation system according to the preceding claim, wherein the drive is a direct drive, in particular a radial flux motor (51), wherein the stator comprises multiple coils (53) which are positioned in a circular arrangement (58), and the rotor comprises a plurality of magnets (55) positioned in a circular arrangement (59).

3. Steering wheel ventilation system according to any of the preceding claims, comprising an air gap (12) between the stator and the rotor, wherein the air gap is in fluid communication with the air inlet of the impeller housing.

4. Steering wheel ventilation system according to any of the preceding claims, wherein the rotor is connected to a rear side (71) of the impeller, and wherein in particular the impeller comprises a plurality of vanes (72), wherein the vanes are positioned on a front side (73) of the impeller.

5. Steering wheel ventilation system according to any of the preceding claims, comprising at least one bearing (42) which provides radial and axial support to the steering wheel part.

6. Steering system (5) for a vehicle (1), the steering system comprising:
- a steering column (3) and
- a steering wheel (2), and
- the steering wheel ventilation system of any of the preceding claims,
wherein the steering column part (30) is integrated in or connected to the steering column, and wherein the steering wheel part (40) is integrated in or connected to the steering wheel,
wherein an at least one air channel (68) is in fluid communication with the hand-held portion (20) of the steering wheel,
wherein the hand-held portion (20) comprises an air manifold (16) and comprises multiple holes (14) in a wall (22) thereof for passing the air which is pumped by the impeller (70) via the air channel and via the air manifold through the holes to the outside.

7. Steering system according to the preceding claim, wherein the impeller and the impeller housing (60) are positioned in a central portion (5) of the steering wheel.

8. Steering system according to any of claims 6-7, wherein the steering wheel is rotatable about a steering wheel rotation axis (6), and wherein the ventilation axis (56) is coaxial with the steering wheel rotation axis.

9. Steering system according to any of claims 6-8, wherein the air inlet (64) is positioned on a rear side (7) of the steering wheel to draw air in via the air gap (12).

10. Steering system according to any of claims 6-9, wherein the steering wheel comprises an air manifold (16) having multiple holes extending radially through the wall of the hand-held portion of the steering wheel.

11. Steering system according to any of claims 6-10, wherein the handheld portion comprises a curved, in particular annular, tube (17) and wherein the air manifold is formed by the tube.

12. Vehicle (1), in particular a car, comprising the steering system of any of claims 6-11.

13. Vehicle according to the preceding claim, comprising a board computer (8), wherein the board computer controls the drive.

14. Vehicle according to any of claims 13-14, comprising a power supply (9) having a range of 0 - 20 W, wherein the drive is connected to the power supply.

15. Vehicle according to the preceding claim, wherein the rotational speed of the impeller is controlled by adjusting the frequency of an electric current supplied to the drive by the power supply, and wherein in particular the torque of the drive is controlled by adjusting the current level of the electric current supplied to the drive by the power supply.

## Patentansprüche

1. Lenkradlüftungssystem (10) zum Erzeugen eines Luftstroms durch einen handgeführten Abschnitt (20) eines Lenkrads (2) eines Fahrzeugs (1), wobei das Lenkradlüftungssystem Folgendes umfasst:
- einen Lenksäulenteil (30), der dazu konfiguriert ist, in eine Lenksäule (3) des Fahrzeugs integriert oder mit ihr verbunden zu sein, wobei der Lenksäulenteil einen Stator (52) eines Antriebs (50) umfasst,
- einen Lenkradteil (40), der dazu konfiguriert ist, in das Lenkrad des Fahrzeugs integriert oder mit ihm verbunden zu sein, wobei der Lenkradteil Folgendes umfasst:
o einen Rotor (54) des Antriebs, wobei der Rotor dazu konfiguriert ist, sich um eine Lüftungsachse (56) zu drehen,
o ein Flügelradgehäuse (60), das dazu konfiguriert ist, in das Lenkrad integriert oder mit ihm verbunden zu sein und zum Aufnehmen eines Flügelrads (70) konfiguriert ist, wobei das Flügelradgehäuse einen Lufteinlass (64) und einen Luftauslass (66) aufweist;
o wobei das Flügelrad (70) innerhalb des Flügelradgehäuses positioniert ist, wobei das Flügelrad mit dem Rotor verbunden ist, wobei das Flügelrad dazu konfiguriert ist, Luft von dem Einlass in mindestens einen mit dem Auslass verbundenen Luftkanal (68) zu pumpen,
o wobei der mindestens eine Luftkanal an einem Ende (69) mit dem Luftauslass verbunden ist und dazu konfiguriert ist, mit dem handgeführten Abschnitt des Lenkrads in Fluidkommunikation zu stehen.

2. Lenkradlüftungssystem nach dem vorhergehenden Anspruch, wobei der Antrieb ein direkter Antrieb, insbesondere ein Radialflussmotor (51) ist, wobei der Stator mehrere Spulen (53) umfasst, die in einer kreisförmigen Anordnung (58) positioniert sind, und der Rotor eine Vielzahl von Magneten (55) aufweist, die in einer kreisförmigen Anordnung (59) positioniert sind.

3. Lenkradlüftungssystem nach einem der vorhergehenden Ansprüche, das einen Luftspalt (12) zwischen dem Stator und dem Rotor umfasst, wobei der Luftspalt in Fluidverbindung mit dem Lufteinlass des Flügelradgehäuses steht.

4. Lenkradlüftungssystem nach einem der vorhergehenden Ansprüche, wobei der Rotor mit einer Rückseite (71) des Flügelrads verbunden ist und wobei insbesondere das Flügelrad eine Vielzahl von Flügeln (72) umfasst, wobei die Flügel auf einer Vorderseite (73) des Flügelrads positioniert sind.

5. Lenkradlüftungssystem nach einem der vorhergehenden Ansprüche, das mindestens ein Lager (42) umfasst, das eine radiale und axiale Abstützung für das Lenkradteil bereitstellt.

6. Lenksystem (5) für ein Fahrzeug (1), wobei das Lenksystem Folgendes umfasst:
- eine Lenksäule (3) und
- ein Lenkrad (2) und
- das Lenkradlüftungssystem nach einem der vorhergehenden Ansprüche,
wobei der Lenksäulenteil (30) in die Lenksäule integriert oder mit ihr verbunden ist und wobei der Lenkradteil (40) in das Lenkrad integriert oder mit ihm verbunden ist,
wobei mindestens ein Luftkanal (68) in Fluidkommunikation mit dem handgeführten Abschnitt (20) des Lenkrads steht,
wobei der handgeführte Abschnitt (20) einen Luftverteiler (16) umfasst und mehrere Löcher (14) in einer Wand (22) davon umfasst, um die Luft, die durch das Flügelrad (70) über den Luftkanal und über den Luftverteiler gepumpt wird, durch die Löcher nach außen zu leiten.

7. Lenksystem nach dem vorhergehenden Anspruch, wobei das Flügelrad und das Flügelradgehäuse (60) in einem mittleren Abschnitt (5) des Lenkrads positioniert sind.

8. Lenksystem nach einem der Ansprüche 6-7, wobei das Lenkrad um eine Lenkraddrehachse (6) drehbar ist und wobei die Lüftungsachse (56) koaxial zu der Lenkraddrehachse ist.

9. Lenksystem nach einem der Ansprüche 6-8, wobei der Lufteinlass (64) auf einer Rückseite (7) des Lenkrads positioniert ist, um Luft über den Luftspalt (12) anzusaugen.

10. Lenksystem nach einem der Ansprüche 6-9, wobei das Lenkrad einen Luftverteiler (16) mit mehreren Löchern umfasst, die radial durch die Wand des handgeführten Abschnitts des Lenkrads verlaufen.

11. Lenksystem nach einem der Ansprüche 6-10, wobei der handgeführte Abschnitt eine gekrümmte, insbesondere ringförmige Röhre (17) umfasst und wobei der Luftverteiler durch die Röhre gebildet wird.

12. Fahrzeug (1), insbesondere ein Auto, das das Lenksystem nach einem der Ansprüche 6-11 umfasst.

13. Fahrzeug nach dem vorhergehenden Anspruch, das einen Bordcomputer (8) umfasst, wobei der Bordcomputer den Antrieb steuert.

14. Fahrzeug nach einem der Ansprüche 13-14, das eine Stromversorgung (9) mit einem Bereich von 0-20 W umfasst, wobei der Antrieb mit der Stromversorgung verbunden ist.

15. Fahrzeug nach dem vorhergehenden Anspruch, wobei die Drehzahl des Flügelrads durch Einstellen der Frequenz eines dem Antrieb durch die Stromversorgung zugeführten elektrischen Stroms gesteuert wird und wobei insbesondere das Drehmoment des Antriebs durch Einstellen des Strompegels des dem Antrieb durch die Stromversorgung zugeführten elektrischen Stroms gesteuert wird.

## Revendications

1. Système de ventilation de volant de direction (10) pour créer un écoulement d'air à travers une portion tenue à la main (20) d'un volant de direction (2) d'un véhicule (1), le système de ventilation de volant de direction comprenant :
- une partie de colonne de direction (30) configurée pour être intégrée ou connectée à une colonne de direction (3) du véhicule, la partie de colonne de direction comprenant un stator (52) d'un entraînement (50),
- une partie de volant de direction (40) configurée pour être intégrée ou connectée au volant de direction du véhicule, la partie de volant de direction comprenant :
∘ un rotor (54) de l'entraînement, dans lequel le rotor est configuré pour entrer en rotation autour d'un axe de ventilation (56),
∘ un carter de compresseur (60) configuré pour être intégré ou connecté au volant de direction et configuré pour accueillir un compresseur (70), le carter de compresseur ayant une entrée d'air (64) et une sortie d'air (66),
∘ le compresseur (70) positionné à l'intérieur du logement de compresseur, le compresseur étant connecté au rotor, le compresseur étant configuré pour pomper l'air de l'entrée dans au moins un canal d'air (68) connecté à la sortie,
∘ l'au moins un canal d'air connecté au niveau d'une extrémité (69) à la sortie d'air et configuré pour être en communication fluidique avec la portion tenue à la main du volant de direction.

2. Système de ventilation de volant de direction selon la revendication précédente, dans lequel l'entraînement est un entraînement direct, en particulier un moteur à écoulement radial (51), dans lequel le stator comprend de multiples bobines (53) positionnées en un agencement circulaire (58), et le rotor comprend une pluralité d'aimants (55) positionnés en un agencement circulaire (59).

3. Système de ventilation de volant de direction selon l'une quelconque des revendications précédentes, comprenant une couche d'air (12) entre le stator et le rotor, dans lequel la couche d'air est en communication fluidique avec l'entrée d'air du carter de compresseur.

4. Système de ventilation de volant de direction selon l'une quelconque des revendications précédentes, dans lequel le rotor est connecté à un côté arrière (71) du compresseur, et dans lequel le compresseur comprend en particulier une pluralité de pales (72), dans lequel les pales sont positionnées sur un côté avant (73) du compresseur.

5. Système de ventilation de volant de direction selon l'une quelconque des revendications précédentes, comprenant au moins un palier (42) qui fournit un support radial et axial à la partie de volant de direction.

6. Système de direction (5) pour un véhicule (1), le système de direction comprenant :
- une colonne de direction (3) et
- un volant de direction (2), et
- le système de ventilation du volant de direction selon l'une quelconque des revendications précédentes,
dans lequel la partie colonne de direction (30) est intégrée ou connectée à la colonne de direction, et dans lequel la partie volant de direction (40) est intégrée ou connectée au volant de direction,
dans lequel au moins un canal d'air (68) est en communication fluidique avec la portion tenue à la main (20) du volant de direction,
dans lequel la portion tenue à la main (20) comprend un collecteur d'air (16) et comprend de multiples trous (14) dans une paroi (22) de celui-ci pour faire passer l'air qui est pompé par la compresseur (70) via le canal d'air et via le collecteur d'air à travers les trous vers l'extérieur.

7. Système de direction selon la revendication précédente, dans lequel la compresseur et le carter de compresseur (60) sont positionnés dans une portion centrale (5) du volant de direction.

8. Système de direction selon l'une quelconque des revendications 6 à 7, dans lequel le volant de direction peut entrer en rotation autour d'un axe de rotation de volant de direction (6), et dans lequel l'axe de ventilation (56) est coaxial à l'axe de rotation du volant de direction.

9. Système de direction selon l'une quelconque des revendications 6 à 8, dans lequel l'entrée d'air (64) est positionnée sur un côté arrière (7) du volant de direction pour aspirer de l'air via la couche d'air (12).

10. Système de direction selon l'une quelconque des revendications 6 à 9, dans lequel le volant de direction comprend un collecteur d'air (16) ayant de multiples trous s'étendant radialement à travers la paroi de la portion tenue à la main du volant de direction.

11. Système de direction selon l'une quelconque des revendications 6 à 10, dans lequel la portion tenue à la main comprend un tube courbe, en particulier annulaire (17) et dans lequel le collecteur d'air est formé par le tube.

12. Véhicule (1), en particulier une voiture, comprenant le système de direction selon l'une quelconque des revendications 6 à 11.

13. Véhicule selon la revendication précédente, comprenant un ordinateur de bord (8), dans lequel l'ordinateur de bord commande l'entraînement.

14. Véhicule selon l'une quelconque des revendications 13 à 14, comprenant une alimentation électrique (9) ayant une plage de 0 à 20 W, dans lequel l'entraînement est connecté à l'alimentation électrique.

15. Véhicule selon la revendication précédente, dans lequel la vitesse de rotation de la compresseur à pales est commandée en ajustant la fréquence d'un courant électrique fourni à l'entraînement par l'alimentation en énergie, et dans lequel en particulier le couple de l'entraînement est commandé en ajustant le niveau de courant du courant électrique fourni à l'entraînement par l'alimentation en énergie.
